# EUROPÄISCHE PATENTSCHRIFT

(11) **EP 2 456 834 B1**
(45) Veröffentlichungstag und Bekanntmachung des Hinweises auf die Patenterteilung: **21.05.2014**
(21) Anmeldenummer: 10732303.2
(22) Anmeldetag: 08.07.2010
(51) Int. Cl.: C09D 13/00

(54) **MINE FÜR SCHREIB-, ZEICHEN- UND/ODER MALGERÄTE**
LEAD FOR PENCILS
MINE POUR CRAYONS

(30) Priorität: 18.07.2009 DE 102009033830
(43) Veröffentlichungstag der Anmeldung: 30.05.2012
(73) Patentinhaber: J.S. Staedtler GmbH & Co. KG, 90427 Nürnberg (DE)
(72) Erfinder: THIES, Andreas, 91090 Effeltrich (DE)
(86) Internationale Anmeldenummer: PCT/EP2010/004160
(87) Internationale Veröffentlichungsnummer: WO 2011/009535

(56) Entgegenhaltungen:
- WO-A1-2010/006742
- WO-A1-2010/006744
- JP-A- 7 179 806
- US-A1- 2002 139 278

## Beschreibung

Die Erfindung betrifft polymergebundene Minen für Schreib-, Zeichen- und/oder Malgeräte.

Derartige Minen zum Schreiben, Zeichnen und/oder Malen sind prinzipiell bekannt. Unter polymergebundenen Minen auf Graphitbasis zum Schreiben, Zeichnen und/oder Malen versteht man einerseits Minen, die fest in Holz oder andere spitzbare Materialien eingebracht werden und andererseits Minen, die verschiebbar in einer biegesteifen Hülle gehaltert sind. Beispiele hierfür sind holzgefasste Bleistifte und Minen für mechanische Stifte, beispielsweise so genannte Druckbleistifte oder Fallstifte. Dabei weisen die Minen üblicherweise Außendurchmesser im Bereich von etwa 0,3 mm bis 6 mm auf.

So sind beispielsweise polymergebundene Graphitminen aus der DE 38 27 968 C1 bekannt. Derartige ungebrannte Minen beinhalten ein polymeres Bindemittel, Gleitmittel und Füllstoffe.

Nachteilig bei der Herstellung derartiger Minen ist es, dass bei einem hohen Füllstoffgehalt von größer als 50 Gew.-% zwar deren Schreib- und Maleigenschaften sehr gut sind, die Viskosität der Minenmasse während der Extrusion aber sehr hoch ist und der dadurch notwendige Extrusionsdruck im Werkzeug und im Extruder sehr hohe Werte annimmt. Der Kopfdruck beträgt etwa 350 bar. Dies wirkt sich insofern nachteilig aus, da eine größere Dimensionierung des Extruders und eine aufwendige Ausstattung erforderlich ist. Aber auch die Lebensdauer der Maschinen und Werkzeuge wird durch den hohen Extrusionsdruck stark reduziert.

Weiter sind aus WO 2010/006744 A1**,** der WO 2010/006742 A1, der US 2002/139278 A1 und der JP 7 179806 A Minen bekannt, welche durch Extrusion hergestellt sind.
Nachteilig ist es jedoch bei derartigen Minen anzusehen, dass diese Minen zwar Zusätze aufweisen die teilweise dazu beitragen den Extrusionsdruck bei deren Herstellung zu senken, dabei aber die Minenfestigkeit derart abnimmt, dass die Bedürfnisse der Verbraucher nicht mehr zufriedenstellend erfüllt werden können.

Aufgabe der Erfindung ist es daher, eine Mine zum Schreiben, Zeichnen und/oder Malen zu schaffen, die die genannten Nachteile nicht aufweist und die mit geringem Extrusionsdruck hergestellt werden kann.
Weiter ist es Aufgabe der Erfindung, dass trotz niedrigen Extrusionsdruck Minen geschaffen werden, die ein erforderliches Maß an Minenfestigkeit besitzen und zudem einen intensiven Farbeindruck des Abstriches der Mine an den Tag legen.

Die Aufgabe wird für die polymergebundene Mine für Schreib-, Zeichen- oder Malgeräte, insbesondere für Bleistifte oder Farbstifte, umfassend mindestens ein polymeres Bindemittel, mindestens ein Wachs und mindestens einen Füllstoff, gelöst, indem die Mine weiterhin 0,5 bis 2,5 Gew.% Palmkernöl und/oder Kokosfett und/oder Kokosöl und/oder Ölsäure aufweist.

Es hat sich in überraschender Weise herausgestellt, dass durch den gezielten Zusatz von Palmkernöl und/oder Kokosfett und/oder Kokosöl und/oder Ölsäure als Minenbestandteil, ein inneres Gleitmittel zur Rezeptur zugegeben ist, wodurch der Extrusionsdruck im Extruder signifikant herabgesetzt wird. Der Zusatz von Palmkernöl und/oder Kokosfett und/oder Kokosöl und/oder Ölsäure in der Minenzusammensetzung führt beim Extrudieren insbesondere zu einer deutlichen Reduzierung des Press- bzw. Extrusionsdrucks am Mundstück oder Kopf des Extruders. Dabei sinkt der Druck mit steigender Zugabemenge an Palmkernöl und/oder Kokosöl und/oder Kokosfett und/oder Ölsäure, wobei eine Reduzierung des Drucks um mindestens 30%, insbesondere um mindestens 50%, gegenüber herkömmlichen extrudierbaren Minenzusammensetzungen erreicht wird.

Es hat sich gezeigt, dass andere natürliche oder synthetische Öle den Druck im Extruder zwar ebenfalls senken, dass diese aber die Festigkeit der extrudierten Mine überproportional beeinträchtigen. Überraschender Weise ist dies bei einem Einsatz von Palmkernöl und/oder Kokosfett und/oder Kokosöl und/oder Ölsäure nicht der Fall, da der Druck im Extruder niedrig und dennoch die Minenfestigkeit im erforderlichen Maß vorhanden ist.

Zudem bewirkt der Zusatz Palmkernöl und/oder Kokosfett und/oder Kokosöl und/oder Ölsäure einen intensiveren Farbeindruck des Abstrichs der Mine und verbessert deren Gleitverhalten beim Schreiben. Bei Bleistiftminen zeigt sich ein satter Abstrich mit hohem Schwärzungsgrad, während Farbstiftminen einen satten, leuchtend intensiven Farbton des Abstrichs zeigen.

Der Anteil von Palmkernöl und/oder Kokosfett und/oder Kokosöl und/oder Ölsäure an der Minenzusammensetzung liegt im Bereich von 0,5 bis 2,5 Gew.-%. Geht der Gehalt an Palmkernöl und/oder Kokosfett und/oder Kokosöl und/oder Ölsäure über die vorstehende Grenze von 2,5 Gew.% hinaus, so wird die Minenfestigkeit überproportional herabgesetzt. Die Minen neigen dann im Gebrauch zum Bröseln oder zum Brechen.

Die verwendeten Wachse sind bei 20 °C knetbar, fest bis brüchig hart, weisen eine grobe bis feinkristalline Struktur auf, sind farblich durchscheinend bis opak, aber nicht glasartig und schmelzen über 40 °C ohne Zersetzung. Sie sind wenig oberhalb des Schmelzpunktes leicht flüssig und besitzen eine stark temperaturabhängige Konsistenz und Löslichkeit.

Bei den erfindungsgemäßen polymergebundenen Minen handelt es sich um ungebrannte Minen, die sofort nach dem Extrudieren ohne eine weitere Wärmebehandlung oder Imprägnierung einsetzbar sind.

Angeführt seien neben Bleistift- und Farbstiftminen auch Sonderminen, wie beispielsweise Minen für so genannte Zimmermannsstifte.

Vorteilhafte Ausgestaltungen ergeben sich aus den Unteransprüchen.

Es hat sich als vorteilhaft erwiesen, wenn die polymergebundene Mine

| | |
|---|---|
| 15 bis 25 Gew.% | Bindemittel |
| 4 bis 20 Gew.% | Wachs |
| 0,5 bis 2,5 Gew.-% | Palmkernöl und/oder Kokosfett und/oder Kokosöl und/oder Ölsäure |
| Rest | Füllstoff(e) aufweist. |

Es hat sich bewährt, wenn das mindestens eine Bindemittel aus mindestens einem Polymer der Gruppe umfassend Polystyrol (PS), Styrol-Acylnitril (SAN), Styrolbutadien (SB), Polyolefine (PO) und Acrylnitril-Butadien-Styrol (ABS) gebildet ist.
Auch Mischungen aus zwei oder mehreren Bindemitteln sind einsetzbar.

Weiterhin hat es sich bewährt, wenn das mindestens eine Wachs mindestens eines aus der Gruppe umfassend Stearate, Montanwache, Amidwachse, Paraffine ist.
Auch Mischungen aus zwei oder mehreren Wachsen sind einsetzbar. Besonders bevorzugt ist es dabei, wenn das mindestens eine Wachs aus Kalziumstearat gebildet ist oder Kalziumstearat umfasst.

Vorteilhafter Weise ist der mindestens eine Füllstoff aus mindestens einem Füllstoff der Gruppe umfassend Graphit, Ruß, hexagonales Bornitrid, Schichtsilikate, Kreide, Schwerspat, bunte Pigmente, unbunte Pigmente gebildet.

Für Bleistiftminen ist dabei insbesondere Graphit oder Graphit in Kombination mit Ruß als farbgebende Füllstoffe bevorzugt. Für Farbstiftminen haben sich Kombinationen aus weißen oder farblosen Füllstoffen, wie hexagonalem Bornitrid, Schichtsilikaten, usw., mit farbgebenden Pigmenten, wie Azo-Pigmente, Phthalocyanine, Dioxazine, Chinacridone, Eisenoxide, Russ, Graphite, Ultramarin, Eisen-Cyankomplexe bewährt.

Eine bevorzugte Zusammensetzung für eine Bleistiftmine umfasst:

| | |
|---|---|
| 15 bis 25 Gew.-% | Bindemittel |
| 4 bis 12 Gew.% | Wachs |
| 0,5 bis 2 Gew.-% | Palmkernöl und/oder Kokosfett und/oder Kokosöl und/oder Ölsäure |
| Rest | Graphit oder Graphit und Ruß |

Insbesondere weist eine Bleistiftmine auf:

| | |
|---|---|
| 15 bis 25 Gew.% | Polystyrol (PS) |
| 4 bis 12 Gew.% | Calziumstearat |
| 0,5 bis 2 Gew.-% | Palmkernöl und/oder Kokosfett und/oder Kokosöl und/oder Ölsäure |
| Rest | Graphit oder Graphit und Ruß |

Eine beispielhaft genannte Rezeptur 1 für eine Bleistiftmine umfasst:

| | |
|---|---|
| Polystyrol (PS) | 21 Gew. % |
| Caliciumstearat | 6 Gew. % |
| Ölsäure | 1,0 Gew. % |
| Graphit | Rest |

Beispielrezeptur 2 für eine Bleistiftmine umfasst:

| | |
|---|---|
| Polystyrol (PS) | 20,5 Gew. % |
| Caliciumstearat | 6 Gew. % |
| Kokosöl | 1,5 Gew. % |
| Graphit | Rest |

In der nachfolgenden **Tabelle** wird die Reduzierung des Extrusionsdrucks im Extruderkopf bei der Herstellung einer erfindungsgemäßen Bleistiftmine nach Rezeptur 1 gegenüber einer extrudierten Bleistiftmine nach dem Stand der Technik dargestellt.

| | Bleistiftmine Rezeptur 1 und 2 | Mine nach dem Stand der Technik |
|---|---|---|
| Druck im Extruderkopf (in bar) | < 200 | 350 - 450 |

Hierbei ist deutlich zu erkennen, dass Minen die entsprechend der erfinderischen Zusammensetzung ausgebildet sind, deutlich geringere Extrusionsdrücke für die Herstellung benötigen. Maschinen- und Werkzeugstandzeit werden verlängert und die Maschinenauslegung vereinfacht.

Eine beispielhafte Rezeptur 3 für eine Bleistiftmine umfasst:

| | |
|---|---|
| Styrol-Acylnitril (SAN) | 15 Gew. % |
| Aluminiumstearat | 10 Gew. % |
| Kokosfett | 2 Gew. % |
| Graphit | Rest |

Eine beispielhafte **Rezeptur 4** für eine Bleistiftmine umfasst:

| | |
|---|---|
| Polystyrol (PS) | 15 Gew. % |
| Aluminiumstearat | 10 Gew. % |
| Kokosöl | 1 Gew. % |
| Palmkernöl | 1 Gew.% |
| Graphit | Rest |

Eine bevorzugte Zusammensetzung für eine Farbstiftmine umfasst:

| | |
|---|---|
| 15 bis 25 Gew.% | Bindemittel |
| 4 bis 12 Gew.% | Wachs |
| 0,5 bis 2 Gew.-% | Palmkernöl und/oder Kokosfett und/oder Kokosöl und/oder Ölsäure |
| Rest | Schichtsilikat(e) und/oder hexagonales Bornitrid sowie mindestens ein buntes Pigment und/oder ein unbuntes Pigment |

Insbesondere weist eine Farbstiftmine auf:

| | |
|---|---|
| 15 bis 25 Gew.% | Polystyrol (PS) |
| 4 bis 12 Gew.% | Montanwachse |
| 0,5 bis 2 Gew.% | Palmkernöl und/oder Kokosfett und/oder Kokosöl und/oder Ölsäure |
| Rest | Talkum und/oder hexagonales Bornitrid sowie mindestens ein buntes Pigment und/oder ein unbuntes Pigment |

Als Verfahren zur Herstellung einer erfindungsgemäßen polymergebundenen Mine hat sich eine Extrusion bewährt.

Die erfindungsgemäße Mine wird insbesondere unter Durchführung nachfolgend aufgeführter Schritte hergestellt:
- Mischen und Granulieren aller Rezepturkomponenten der Mine zu einem Minengranulat;
- Extrudieren den Minengranulates bei einer Temperatur im Bereich von 130 bis 200 °C auf einem Extruder durch ein geeignetes Mundstück zu endlosen Minensträngen;
- Kühlen und Verfestigen des endlosen Minenstrangs; und
- Schneiden des endlosen Minenstrangs auf Endlänge, insbesondere auf die benötigte Stiftlänge;

Je nach Extrusionskopf kann der Minenquerschnitt beliebige Formen annehmen - rund, eckig oder Kombinationen daraus. Des Weiteren besteht die Möglichkeit über eine Mehrfach-Coextrusion verschiedene Minenrezepturen in einem Extrusionskopf zu einer mehrkomponentigen Mine zu verbinden.

## Patentansprüche

1. **Polymergebundene Mine** für Schreib-, Zeichen- oder Malgeräte, insbesondere für Bleistifte oder Farbstifte, umfassend mindestens ein polymeres Bindemittel, mindestens ein Wachs und mindestens einen Füllstoff,
**dadurch gekennzeichnet,**
**dass** die Mine weiterhin Palmkernöl und/oder Kokosfett und/oder Kokosöl und/oder Ölsäure aufweist,
**dass** die Mine 15 bis 25 Gew.% Bindemittel, 4 bis 20 Gew.% Wachs, 0,5 bis 2,5 Gew.-% Palmkernöl und/oder Kokosfett und/oder Kokosöl und/oder Ölsäure und als Rest Füllstoff(e) aufweist und **dass** das mindestens eine Bindemittel aus mindestens einem Polymer der Gruppe umfassend Polystyrol (PS), Styrot/Acrylnitril (SAN), Styrol/Butadien (SB), Polyolefine (PO) und Acrylnitril/Butadien/Styrol (ABS) gebildet ist.

2. **Mine** nach Anspruch 1, **dadurch gekennzeichnet,**
**dass** das mindestens eine Wachs aus mindestens einem Wachs der Gruppe umfassend Fettsäuren, Stearate, Montanwachse, Amidwachse, Paraffine gebildet ist.

3. **Mine** nach Anspruch 1 oder 2,
**dadurch gekennzeichnet,**
**dass** das mindestens eine Wachs aus Kalziumstearat gebildet ist oder Kalziumstearat umfasst.

4. **Mine** nach einem der Ansprüche 1 bis 3,
**dadurch gekennzeichnet,**
**dass** der mindestens eine Füllstoff mindestens einen Füllstoff aus der Gruppe umfassend Graphit, Ruß, hexagonales Bornitrid, Schichtsilikate, Kreide, Schwerspat, bunte Pigmente und/oder unbunte Pigmente aufweist.

5. **Mine** nach einem der Ansprüche 1 bis 4,
**dadurch gekennzeichnet,**
**dass** die Mine eine Bleistiftmine ist und
| | |
|---|---|
| 15 bis 25 Gew.% | Bindemittel |
| 4 bis 12 Gew.-% | Wachs |
| 0,5 bis 2 Gew.% | Palmkernöl und/oder Kokosfett und/oder Kokosöl und/oder Ölsäure |
| Rest | Graphit oder Graphit und Ruß aufweist. |

6. **Mine** nach Anspruch 4,
**dadurch gekennzeichnet,**
**dass** die Mine eine Bleistiftmine ist und
| | |
|---|---|
| 15 bis 25 Gew.% | Polystyrol |
| 4 bis 12 Gew.-% | Kalziumstearat |
| 0,5 bis 2 Gew.% | Palmkernöl und/oder Kokosfett und/oder Kokosöl und/oder Ölsäure |
| Rest | Graphit oder Graphit und Ruß aufweist. |

7. **Mine** nach einem der Ansprüche 1 bis 4,
**dadurch gekennzeichnet,**
**dass** die Mine eine Farbstiftmine ist und
| | |
|---|---|
| 15 bis 25 Gew.% | Bindemittel |
| 4 bis 12 Gew.% | Wachs |
| 0,5 bis 2 Gew.-% | Palmkernöl und/oder Kokosfett und/oder Kokosöl und/oder Ölsäure |
| Rest | Schichtsilikat(e) und/oder hexagonales Bornitrid sowie mindestens ein buntes Pigment und/oder ein unbuntes Pigment aufweist. |

8. Mine nach Anspruch 7,
**dadurch gekennzeichnet,**
**dass** die Mine eine Farbstiftmine ist und
| | |
|---|---|
| 15 bis 25 Gew.% | Polystyrol |
| 4 bis 12 Gew.% | Montanwachs |
| 0,5 bis 2 Gew.% | Palmkernöl und/oder Kokosfett und/oder Kokosöl und/oder Ölsäure |
| Rest | Talkum und/oder hexagonales Bornitrid sowie mindestens ein buntes Pigment und/oder ein unbuntes Pigment aufweist. |

9. **Verfahren zur Herstellung einer polymergebundenen Mine** nach einem der Ansprüche 1 bis 8,
**dadurch gekennzeichnet,**
**dass** die Mine durch Extrusion gebildet wird.

## Claims

1. Polymer-bound core for writing, drawing or marking instruments, particularly for pencils or crayons, comprising at least one polymer binder, at least one wax and at least one filler,
**characterised in that**
the core further comprises palm nut oil and/or coconut fat and/or coconut oil and/or oleic acid,
the core comprises 15 to 25 weight % binder, 4 to 20 weight % wax, 0.5 to 2.5 weight % palm nut oil and/or coconut butter and/or coconut oil and/or oleic acid and filler(s) as remainder and
the at least one binder is formed from at least one polymer of the group comprising polystyrol (PS), styrol/acrylnitrile (SAN), styrol/butadiene (SB), polyolefines (PO) and acrylnitrile/butadiene/styrol (ABS).

2. Core according to claim 1, **characterised in that** the at least one wax is formed from at least one wax as a group comprising fatty acids, stearates, montan waxes, amide waxes and paraffins.

3. Core according to claim 1 or 2, **characterised in that** the at least one wax is formed from calcium stearate or comprises calcium stearate.

4. Core according to any one of claims of 1 to 3, **characterised in that** the at least one filler comprises at least one filler from the group comprising graphite, soot, hexagonal boron nitride, stratified silicates, chalk, barite, coloured pigments and/or non-coloured pigments.

5. Core according to any one of claims 1 to 4, **characterised in that** the core is a pencil lead and comprises
| | |
|---|---|
| 15 to 25 weight % | binder |
| 4 to 12 weight % | wax |
| 0.5 to 2 weight % | palm nut oil and/or coconut butter and/or coconut oil and/or oleic acid |
| remainder | graphite or graphite and soot |

6. Core according to claim 4, **characterised in that** the core is a pencil lead and comprises
| | |
|---|---|
| 15 to 25 weight % | polystyrol |
| 4 to 12 weight % | calcium stearate |
| 0.5 to 2 weight % | palm nut oil and/or coconut butter and/or coconut oil and/or oleic acid |
| remainder | graphite or graphite and soot |

7. Core according to any one of claims 1 to 4, **characterised in that** the core is a crayon lead and comprises
| | |
|---|---|
| 15 to 25 weight % | binder |
| 4 to 12 weight % | wax |
| 0.5 to 2 weight % | palm nut oil and/or coconut butter and/or coconut oil and/or oleic acid |
| remainder | stratified silicate(s) and/or hexagonal boron nitride as well as at least one coloured pigment and/or non-coloured pigment |

8. Core according to claim 7, **characterised in that** the core is a crayon lead and comprises
| | |
|---|---|
| 15 to 25 weight % | polystyrol |
| 4 to 12 weight % | montan wax |
| 0.5 to 2 weight % | palm nut oil and/or coconut butter and/or coconut oil and/or oleic acid |
| remainder | talcum and/or hexagonal boron nitride as well as at least one coloured pigment and/or non-coloured pigment |

9. Method of producing a polymer-bound core according to any one of claims 1 to 8, **characterised in that** the core is formed by extrusion.

## Revendications

1. Mine à liaison polymère pour instruments d'écriture, de dessin ou de peinture, en particulier pour crayons noirs ou crayons de couleur, renfermant au moins un liant polymère, au moins une cire et au moins une substance de charge,
**caractérisée par le fait**
**que** la mine contient, par ailleurs, de l'huile de palmiste et/ou de la graisse de coco et/ou de l'huile de coco et/ou de l'acide oléique,
**que** ladite mine renferme de 15 à 25 % en poids de liant, de 4 à 20 % en poids de cire, de 0,5 à 2,5 % en poids d'huile de palmiste et/ou de graisse de coco et/ou d'huile de coco et/ou d'acide oléique, et une ou des substance(s) de charge pour la part restante,
et **que** le liant à présence minimale est constitué d'au moins un polymère du groupe comprenant du polystyrène (PS), du styrène-acrylonitrile (SAN), du styrène-butadiène (SB), des polyoléfines (PO) et de l'acrylonitrile-butadiène-styrène (ABS).

2. Mine selon la revendication 1, **caractérisée par le fait que** la cire à présence minimale est constituée d'au moins une cire du groupe comprenant des acides gras, des stéarates, des cires de lignite, des cires d'amides, des paraffines.

3. Mine selon la revendication 1 ou 2,
**caractérisée par le fait**
**que** la cire à présence minimale est constituée de stéarate de calcium, ou renferme du stéarate de calcium.

4. Mine selon l'une des revendications 1 à 3,
**caractérisée par le fait**
**que** la substance de charge à présence minimale comporte au moins une substance de charge du groupe comprenant du graphite, du noir de carbone, du nitrure de bore hexagonal, des phyllosilicates, de la craie, de la barytine, des pigments colorés et/ou des pigments achromatiques.

5. Mine selon l'une des revendications 1 à 4,
**caractérisée par le fait**
**que** ladite mine est une mine de crayon noir et comprend
| | |
|---|---|
| de 15 à 25 % en poids | de liant, |
| de 4 à 12 % en poids | de cire, |
| de 0,5 à 2 % en poids | d'huile de palmiste et/ou de graisse de coco et/ou d'huile de coco et/ou d'acide oléique, |
| | du graphite ou du graphite et du noir de carbone pour la part restante. |

6. Mine selon la revendication 4,
**caractérisée par le fait**
**que** ladite mine est une mine de crayon noir et comprend
| | |
|---|---|
| de 15 à 25 % en poids | de polystyrène, |
| de 4 à 12 % en poids | de stéarate de calcium, |
| de 0,5 à 2 % en poids | d'huile de palmiste et/ou de graisse de coco et/ou d'huile de coco et/ou d'acide oléique, |
| | du graphite ou du graphite et du noir de carbone pour la part restante. |

7. Mine selon l'une des revendications 1 à 4,
**caractérisée par le fait**
**que** ladite mine est une mine de crayon de couleur et comprend
| | |
|---|---|
| de 15 à 25 % en poids | de liant, |
| de 4 à 12 % en poids | de cire, |
| de 0,5 à 2 % en poids | d'huile de palmiste et/ou de graisse de coco et/ou d'huile de coco et/ou d'acide oléique, |
| | un ou des phyllosilicate(s) et/ou du nitrure de bore hexagonal, ainsi qu'au moins un pigment coloré et/ou un pigment achromatique pour la part restante. |

8. Mine selon la revendication 7,
**caractérisée par le fait**
**que** ladite mine est une mine de crayon de couleur et comprend
| | |
|---|---|
| de 15 à 25 % en poids | de polystyrène, |
| de 4 à 12 % en poids | de cire de lignite, |
| de 0,5 à 2 % en poids | d'huile de palmiste et/ou de graisse de coco et/ou d'huile de coco et/ou d'acide oléique, |
| | du talc et/ou du nitrure de bore hexagonal, ainsi qu'au moins un pigment coloré et/ou un pigment achromatique pour la part restante. |

9. Procédé de fabrication d'une mine à liaison polymère conforme à l'une des revendications 1 à 8,
**caractérisé par le fait**
**que** ladite mine est formée par extrusion.
